# DEMANDE DE BREVET EUROPEEN

(11) **EP 1 424 193 A1**
(43) Date de publication de la demande: **02.06.2004**
(21) Numéro de dépôt: 02292925.1
(22) Date de dépôt: 26.11.2002
(51) Int. Cl.: B32B 21/04, E04F 15/10, E04F 15/16, B32B 31/00, B27K 3/15

(54) **Revêtement de sol souple et procédé de fabrication d'un tel revêtement de sol**

(71) Demandeur: Tarkett Sommer S.A., 92748 Nanterre Cedex (FR)
(72) Inventeur: Casoli, Alain, 9648 Erpeldange (LU); De Roeck, Herwig, 08090 Aiglemont (FR); Roussel, Albert, 9514 Wiltz (LU)
(74) Mandataire: Kihn, Pierre Emile Joseph

(57) **Abrégé**

Un revêtement de sol (10) comprend : une couche de support synthétique souple (12); une couche décorative en bois (14), flexible, sur la couche de support synthétique (12), la couche décorative en bois (14) ayant une face arrière (18) faisant face à couche de support synthétique et une face avant (16) opposée à la face arrière (18); et une couche d'usure transparente (20) recouvrant la face avant (16) de la couche décorative en bois (14). La flexibilité de la couche décorative en bois (14) est telle que le revêtement de sol (10) peut être enroulé.

## Description

### Introduction

La présente invention concerne un revêtement de sol et un procédé de fabrication d'un tel revêtement de sol.

### Etat de la technique

On trouve aujourd'hui des revêtements de sol souples type vinyle ou linoléum avec une variété de motifs. Disponibles en plusieurs largeurs et sous forme de rouleaux, dalles ou lés, ils s'adaptent à tous les besoins.

Un revêtement de sol souple du type vinyle comprend généralement une couche de support souple en PVC, éventuellement munie d'une couche de stabilisation, une couche décorative en PVC sur laquelle est imprimée le motif et une couche d'usure en PVC transparent pour protéger le motif imprimé.

L'aspect esthétique du bois étant apprécié de tous, les revêtements de sol souples imitant les parquets et planchers connaissent un large succès. Les revêtements souples sont faciles à entretenir et favorisent une bonne isolation thermique et phonique. Leur souplesse permet une manipulation aisée et un stockage en rouleau. La pose est facile et rapide. Malgré ces avantages, certains éprouvent des réticences à choisir de tels revêtements à cause de leur rendu esthétique qui est considéré comme inférieur à celui d'un parquet naturel.

### Objet de l'invention

L'objet de la présente invention est de proposer un revêtement de sol qui offre les avantages d'un revêtement de sol souple tout en présentant un aspect esthétique comparable à celui d'un parquet naturel. Cet objectif est atteint par un revêtement de sol selon la revendication 1.

### Description générale de l'invention revendiquée avec ses principaux avantages

Conformément à l'invention, un revêtement de sol comprend une couche support souple en matière synthétique et une couche décorative en bois, flexible, sur la couche de support synthétique, la couche décorative en bois ayant une face arrière faisant face à couche de support synthétique et une face avant opposée à la face arrière. La face avant de la couche décorative en bois est couverte par une couche d'usure transparente. Selon un aspect important de la présente invention, la flexibilité de la couche décorative en bois est telle que le revêtement de sol peut être enroulé.

Le présent revêtement de sol constitue donc un revêtement de sol composite comprenant une couche décorative en bois qui possède une flexibilité accrue, et confère au revêtement une souplesse comparable à celle d'un revêtement souple traditionnel.

Par "revêtement souple" on entend de manière générale les revêtements de sol pouvant être enroulés autour d'un mandrin et donc généralement disponibles sous forme de rouleaux. Les revêtements souples traditionnels sont les revêtements de sols homogènes ou hétérogènes à base de chlorure de vinyle, en caoutchouc, ainsi que le linoléum.

Le revêtement de sol selon l'invention présente par conséquent les avantages des revêtements souples, à savoir: manipulation et stockage aisés, pose rapide, et entretien facile. En outre, la présence dans le revêtement de sol de la couche décorative en bois naturel permet un rendu esthétique comparable à celui d'un parquet naturel, bien supérieur à celui d'un revêtement souple traditionnel.

La couche décorative en bois a de préférence une épaisseur inférieure à 1 mm, de manière plus préférée entre 0,1 et 0,6 mm, et de manière encore plus préférée entre 0,2 et 0,4 mm. Elle peut être formée d'une feuille ou d'un assemblage de plusieurs feuilles ou lamelles de bois adjacentes. Ces feuilles ou lamelles sont préférablement collées à la couche de support synthétique souple au moyen d'un film thermocollant, placé sur la couche de support synthétique, assurant une adhérence raisonnable sans toutefois modifier la souplesse du complexe.

On comprendra que la flexibilité naturelle d'une feuille de bois d'une épaisseur supérieure à 0,5 mm n'est généralement pas suffisante pour permettre un enroulement. C'est pourquoi, dans le présent revêtement de sol, la couche décorative en bois est avantageusement conçue pour présenter une flexibilité importante, comme indiqué ci-dessous. Il est toutefois possible d'utiliser des feuilles de bois d'épaisseurs inférieures à 0,5 mm, mais de telles feuilles sont relativement chères.

Dans un premier mode de réalisation, la couche décorative en bois comporte sur sa face arrière des fentes disposées en stries perpendiculaire aux fibres du bois. Cette striation assouplit la couche de bois et procure au revêtement de sol une souplesse comparable à celle d'un revêtement souple traditionnel.

Dans un autre mode de réalisation, la couche décorative en bois est constituée de bois dont la structure fibreuse est rompue. Cela permet d'obtenir la souplesse requise pour l'enroulement et évite le retour du revêtement de sol lorsqu'on le déroule.

Dans un troisième mode de réalisation, la couche décorative en bois est imprégnée de polyéthylène-glycol. Ce genre d'imprégnation donne à la couche décorative en bois la souplesse requise pour un revêtement de sol compatible avec la définition d'un revêtement souple traditionnel et permet simultanément une stabilisation dimensionnelle du bois. D'autres produits ayant un effet similaire au polyéthylène-glycol peuvent aussi être utilisés pour cette stabilisation dimensionnelle par imprégnation. De tels produits sont notamment les glycols (éthylène glycol, diéthylène glycol, triéthylène glycol), les polyglycols en général et dérivés du polyéthylène glycol comme le polyéthylène glycol diacrylate, le polyéthylène glycol dimethacrylate, le polypropylène glycol et dérivés, les glycérols et polyglycérols, les dialdéhydes (glyoxal et dérivés, glutaraldéhyde...), ou encore des mélanges de ces différents produits, facultativement en présence de catalyseurs (par ex. dioxyde de soufre ou sulfate d'aluminium).

Il est à noter qu'un revêtement de sol selon l'invention peut également comprendre une couche de bois dont la flexibilisation résulte de la combinaison de ces trois modes de réalisation.

La couche de support synthétique peut être réalisée dans un matériau souple classique généralement utilisé pour les revêtements souples. On utilisera toutefois préférablement une feuille souple de PVC pour la couche de support synthétique. Elle pourra éventuellement être pourvue des dossiers utilisés habituellement tels que des dossiers en fibre de verre, feutre, support de jute ou de polyester, des dossiers mousses etc. Un tel dossier devrait préférablement répondre aux exigences de poinçonnement requises habituellement pour les revêtements de sol. D'autres matériaux utilisables pour la couche synthétique de support sont les matériaux dits "chlore free" à base polyoléfines (copolymères et homopolymères).

La couche d'usure transparente confère au présent revêtement de sol une certaine résistance à l'usure. Celle-ci peut consister en une feuille thermoplastique transparente collée ou doublée sur l'assemblage composite bois-support. Son épaisseur est de préférence comprise entre 50 et 300 µm.

Des films thermocollants à base copolyamide ou polyuréthanne, d'épaisseur comprise entre 20 et 50 µm seront de préférence utilisés pour coller la couche d'usure transparente et contre-coller la feuille de bois sur le support. L'adhérence inter-couches peut également être obtenue en employant des colles liquides enduites (pré-séchées ou non), des poudre thermofusibles, des colles en émulsion (type acrylique ou copolymère, éthylène vinyle acétate), ou encore des colles "hot melts" déposables par encolleuses à rouleaux ou buses à lèvres (essentiellement à base de polyuréthane, comme par exemple les colles PUR FECT LOK® et PUR FECT BIND® commercialisées par National Starch & Chemical, basée à Bridgewater, New Jersey, USA). Le choix du produit utilisé pour l'adhérence entre couches devrait se faire en fonction de la transparence et la compatibilité avec le procédé.

Du fait de la plastification des feuilles de bois, l'environnement immédiat de la feuille de bois ne subit que de faibles changements de taux d'humidité et les variations dimensionnelles du bois sont ainsi fortement réduites. Afin d'optimiser la stabilisation dimensionnelle, une sous couche matricée, préférentiellement un voile de verre enduit (composé de fibres de verre -diamètre d'environ 10 µm- tissées ou non tissées et fermé par un plastisol afin de créer une surface lisse), sera avantageusement utilisée pour la création du support. L'homme de l'art pourra aisément faire un choix approprié du grammage et de la distance entre la feuille de bois et le voile de verre afin de trouver le meilleur compromis entre stabilité dimensionnelle et flexibilité. La plastification de la couche décorative en bois permet l'installation du présent revêtement de sol dans des endroits à hauts pourcentages d'humidité comme une salle de bain, ce qui est difficilement envisageable avec les parquets naturels.

La stabilisation dimensionnelle du bois peut être également atteinte, comme déjà mentionné, par l'imprégnation du bois au moyen de polyéthylène-glycol ou d'autres produits à effets similaires, avant constitution du composite. Le traitement peut se faire par trempage ou application sous vide. On choisit l'une ou l'autre de ces techniques bien connues en soi, essentiellement en fonction des taux d'imprégnation désirés et de la cinétique de traitement.

Selon un autre aspect de la présente invention, on propose un procédé de fabrication de revêtement de sol dans lequel on assemble une couche de support synthétique souple, une couche décorative en bois flexible, ladite couche décorative en bois ayant une face arrière face à la couche de support synthétique et une face avant opposée à la face arrière, et une couche d'usure transparente de sorte à obtenir un revêtement de sol cohérent, c'est-à-dire ayant une bonne adhérence entre les couches. Selon un aspect important de la présente invention, la couche décorative en bois est soumise à un traitement de flexibilisation permettant au revêtement de sol d'être enroulé.

Un tel procédé permet donc de fabriquer un revêtement de sol dont la souplesse est comparable à celle d'un revêtement souple traditionnel et qui est esthétiquement comparable à un parquet naturel. Le procédé peut être réalisé en continu, ou en discontinu par exemple pour la fabrication de dalles.

Les différentes couches peuvent être assemblées en une seule fois. Néanmoins, dans la pratique, il peut être plus adéquat de réaliser tout d'abord un pré-assemblage de la couche de support synthétique et de la couche décorative en bois, puis de rajouter la couche d'usure.

Le traitement de flexibilisation qui est mis en oeuvre est destiné à obtenir une souplesse du bois compatible avec la définition d'un revêtement de sol souple.

Dans un premier mode de réalisation, une souplesse du bois compatible avec la définition d'un revêtement souple peut être atteinte en striant une feuille d'épaisseur standard (généralement de l'ordre de 0,5 à 0,6 mm) dans le sens perpendiculaire aux fibres avec une lame avant assemblage. La couche décorative est alors assemblée avec sa face inférieure, c'est-à-dire striée, tournée vers la couche support synthétique. De ce fait, les striures ne sont pas apparentes sur la face de la feuille de bois au contact de la couche d'usure transparente.

Dans un deuxième mode de réalisation, une souplesse du bois compatible avec la définition d'un revêtement souple est atteinte en diminuant l'épaisseur de départ de la feuille de bois après assemblage avec la couche de support synthétique. Dans ce cas l'assemblage de la couche décorative en bois et de la couche support se fait donc préalablement. Ce doublage donne à la feuille de bois suffisamment de cohésion, de résistance au déchirement et à la compression pour pouvoir réduire son épaisseur par ponçage ou par refente avec une lame rotative tout en préservant une surface uniforme, continue et sans défaut d'aspect de la feuille de bois. Dans le cas de la refente de la couche décorative en bois, on effectue un doublage de la feuille de bois entre deux supports et puis on refend le sandwich obtenu dans le milieu de la couche décorative en bois, ce qui permet d'éviter une perte de matière inévitable avec un ponçage. Que ce soit par ponçage ou refente, on réduira de préférence l'épaisseur de départ de la feuille de bois de sorte à obtenir une feuille de bois ayant une épaisseur entre 0,1 et 0,4 mm, de manière plus préférée entre 0,2 et 0,3 mm.

On notera que le procédé par refente permet de travailler avec des feuilles de bois ayant une épaisseur de départ par exemple de 0,6 mm, et d'obtenir deux feuilles de bois de 0,3 mm sur leur support synthétique souple. Cela permet un coût de production nettement plus faible qu'en travaillant directement avec des feuilles de bois de 0,3 mm, car les feuilles de bois d'épaisseurs inférieures à 0,5 mm sont relativement chères.

Dans un troisième mode de réalisation, une souplesse du bois compatible avec la définition d'un revêtement souple peut être atteinte par rupture des structures fibreuses du bois après réalisation complète de la structure du revêtement de sol. Cette rupture des fibres de bois peut être effectuée en faisant épouser au revêtement composite une succession de cylindres à diamètre décroissant. Dans un premier temps suivant le sens parallèle aux fibres de bois, puis suivant une direction perpendiculaire. La structure sandwich du revêtement composite empêche le redressement des fibres de bois rompues préservant ainsi l'aspect de surface de la feuille de bois. Après traitement, on obtient non seulement un gain important de souplesse mais on élimine également le retour brusque du revêtement de sol composite lorsqu'on le déroule.

Dans un quatrième mode de réalisation, une souplesse du bois compatible avec la définition d'un revêtement souple peut être atteinte par l'imprégnation du bois au moyen de polyéthylène-glycol ou de produits similaires avant assemblage. Le traitement peut se faire par trempage ou application sous vide. On choisit l'une ou l'autre de ces techniques bien connues, essentiellement en fonction des taux d'imprégnation désirés et de la cinétique du traitement.

Il est à noter que ces quatre modes de réalisation du présent procédé peuvent également être combinés entre eux, moyennant éventuellement quelques adaptations. Pour les trois premiers modes de réalisations, on pourra notamment effectuer une imprégnation du bois avec du polyéthylène glycol ou un produit à effet similaire, afin d'obtenir une stabilisation dimensionnelle de la couche décorative, comme expliqué précédemment.

La couche d'usure peut consister en une feuille thermoplastique transparente, ayant de préférence une épaisseur entre 50 et 300 µm, collée ou doublée sur l'assemblage préalable couche de support synthétique/couche décorative en bois. Afin que la couche d'usure épouse le relief du matériau structuré et conserve donc l'aspect du bois, la couche d'usure est de préférence assemblée au contact d'un élastomère choisi en fonction des conditions de doublage et de la nature de la couche d'usure. Ainsi la feuille de protection, rendue déformable mais non fondue sous l'effet de la chaleur, est poussée par la couche élastomère dans la structure poreuse du matériau et conserve le grain du bois lors du refroidissement. La couche d'usure peut également être un vernis appliqué sur la surface de la couche de bois.

Des films thermocollants à base copolyamide ou polyuréthane, d'épaisseur comprise entre 20 et 50 µm, seront de préférence utilisés pour coller la couche d'usure transparente et contre-coller la feuille de bois sur le support. On intercalera alors ces feuilles thermocollantes lors de l'assemblage entre la couche de support synthétique et la couche décorative en bois, respectivement entre la couche décorative en bois et la couche d'usure transparente. Le collage peut être effectué en discontinu sous une presse, ou en continu entre deux cylindres.

### Description détaillée d'un mode de réalisation préféré de l'invention

D'autres particularités et caractéristiques de l'invention ressortiront de la description détaillée d'un mode de réalisation avantageux présenté ci-dessous, à titre d'illustration, en se référant au dessin annexé. Celui-ci montre :

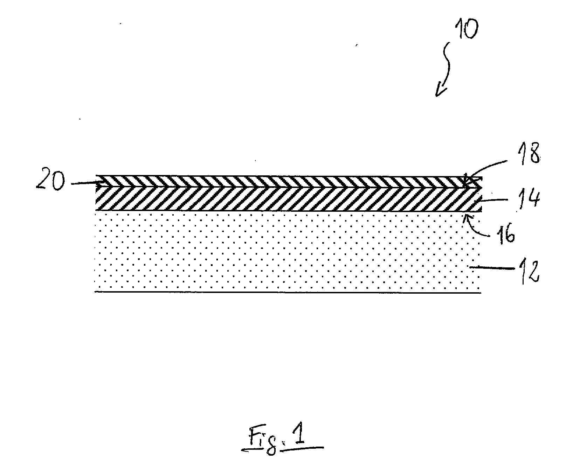

- Fig.1:: une vue en coupe d'un mode préféré de réalisation d'un revêtement de sol selon l'invention.

Sur la Fig.1 est représenté un mode de réalisation préféré du présent revêtement de sol 10. Il comprend une couche de support 12 en matière synthétique souple, de préférence en PVC. Sur la couche de support 10 se trouve une couche décorative en bois 14, qui a une face avant 16 et une face arrière 18 opposée à la face avant 16. La couche décorative en bois 14 est formée de feuilles de bois adjacentes ayant une épaisseur de l'ordre de 0,5 mm. La surface avant 16 de la couche décorative en bois 14 est recouverte d'une couche d'usure transparente 20, par exemple un film thermoplastique de 30 à 50 µm d'épaisseur. Bien que cela ne soit pas montré sur la Figure, un film thermocollant est intercalé entre la couche de support 12 et la couche décorative en bois 14. Un autre film thermocollant est intercalé entre la couche décorative en bois 14 et la couche d'usure 20. Les films thermocollants sont de préférence à base de copolyamide ou polyuréthane et ont une épaisseur entre 30 et 50 µm. On peut par exemple employer le film thermocollant TC 5003 polyuréthane base polyester ou le film TC 205 base copolyamide de la société Prochimir (France).

On remarquera que la couche décorative en bois 14 a une flexibilité telle que le revêtement de sol peut être enroulé. Dans la présente variante, cette flexibilité importante de la couche décorative en bois 14 résulte de la présence, sur sa face arrière 16, de fentes disposées en stries perpendiculaires aux fibres du bois.

Un procédé de fabrication du revêtement de sol de la Fig.1 va maintenant être décrit dans un mode de réalisation préféré.

Tout d'abord, afin d'améliorer la flexibilité des feuilles de bois qui vont former la couche décorative 14, celles-ci sont soumises à un traitement de flexibilisation. Dans la présente variante, ce traitement consiste donc à former sur les faces arrières des feuilles de la couche décorative 14 des fentes disposées en stries perpendiculaires aux fibres du bois. Ensuite, on assemble la couche de support 12 et les feuilles de bois de la couche décorative 14 avec leur faces inférieures striées vers la couche de support 12, en intercalant entre les deux une feuille thermocollante. Les trois couches sont soumises à des conditions de température et de pression adaptées afin de les coller. Cela peut se faire en passant simultanément les trois couches entre deux cylindres rotatifs pour un procédé en continu, ou en superposant des formats de chaque couche dans une presse.

Dans une deuxième étape, on assemble le complexe obtenu lors du pré-assemblage avec la couche d'usure 20, en intercalant à nouveau un film thermocollant. On procède comme précédemment: le complexe pré-assemblé, le film thermocollant et la couche d'usure 20 sont soit passés simultanément entre des rouleaux, soit superposés dans une presse, dans les deux cas dans des conditions de température et de pression adaptées. Avantageusement, lors de l'application de la couche d'usure 20, on veille à ce que la face extérieure de la couche d'usure 20 soit en contact avec un élastomère, ce qui lui permet se conformer au relief de la face avant 18 de la couche décorative en bois 14.

On obtient ainsi un revêtement de sol qui a la souplesse d'un revêtement de sol plastique traditionnel et une apparence comparable à celle d'un parquet naturel.

## Revendications

1. Revêtement de sol comprenant :
une couche de support synthétique souple;
une couche décorative en bois, flexible, sur la couche de support synthétique, la couche décorative en bois ayant une face arrière faisant face à couche de support synthétique et une face avant opposée à la face arrière;
une couche d'usure transparente recouvrant la face avant de la couche décorative en bois;
la flexibilité de la couche décorative en bois étant telle que le revêtement de sol peut être enroulé.

2. Revêtement de sol selon la revendication 1, dans lequel la face arrière de la couche décorative en bois comporte des fentes disposées en stries perpendiculaires aux fibres.

3. Revêtement de sol selon la revendication 1 ou 2, dans lequel la couche décorative en bois est constituée de bois dont les structures fibreuses sont rompues.

4. Revêtement de sol selon la revendication 1, 2 ou 3, dans lequel la couche décorative en bois est imprégnée d'un produit choisi parmi le groupe constitué des glycols, polyglycols et leurs dérivés, glycérols, polyglycérols et les dialdéhydes, ou un de leurs mélanges, facultativement en présence de catalyseur.

5. Revêtement de sol selon l'une quelconque des revendications précédentes, dans lequel la couche décorative en bois est formée de plusieurs feuilles et/ou lames de bois adjacentes.

6. Revêtement de sol selon l'une quelconque des revendications précédentes, dans lequel la couche décorative en bois a une épaisseur inférieure à 1 mm, de préférence comprise entre 0,1 et 0,6 mm.

7. Revêtement de sol selon la revendication précédente, dans lequel la couche décorative en bois a une épaisseur comprise entre 0,2 et 0,4 mm.

8. Revêtement de sol selon l'une quelconque des revendications précédentes, comprenant un film thermocollant entre la couche de support synthétique et la couche décorative en bois.

9. Revêtement de sol selon l'une quelconque des revendications précédentes, comprenant un film thermocollant entre la couche décorative en bois et la couche d'usure transparente.

10. Revêtement de sol selon la revendication 8 ou 9, dans lequel le film thermocollant est à base de copolyamide ou de polyuréthane et a une épaisseur entre 20 et 50 µm.

11. Revêtement de sol selon l'une quelconque des revendications précédentes, dans lequel la couche d'usure transparente est un film thermoplastique d'une épaisseur de 50 à 300 µm.

12. Revêtement de sol selon l'une quelconque des revendications précédentes, dans lequel la couche de support synthétique est en PVC ou en matériau à base polyoléfine.

13. Revêtement de sol selon l'une quelconque des revendications précédentes, dans lequel la couche de support synthétique est munie d'un dossier.

14. Procédé de fabrication d'un revêtement de sol dans lequel on assemble une couche de support synthétique souple, une couche décorative en bois, ladite couche décorative en bois ayant une face arrière face à la couche de support synthétique et une face avant opposée à la face arrière, et une couche d'usure transparente de sorte à obtenir un revêtement de sol cohérent, et dans lequel on soumet la couche décorative en bois à un traitement de flexibilisation permettant au revêtement de sol d'être enroulé.

15. Procédé selon la revendication 14, dans lequel :
le traitement de flexibilisation comprend la formation de stries sur la face arrière de la couche de bois dans le sens perpendiculaire aux fibres; et
la couche décorative en bois est assemblée à la couche de support synthétique avec sa face inférieure striée vers la couche de support synthétique.

16. Procédé selon la revendication 14 ou 15, dans lequel le traitement de flexibilisation comprend la réduction de l'épaisseur de la couche de bois après son assemblage à la couche de support synthétique.

17. Procédé selon la revendication 16, dans lequel la réduction de l'épaisseur se fait par ponçage.

18. Procédé selon l'une quelconque des revendications 14 à 17, dans lequel la couche de support synthétique et la couche décorative sont assemblées préalablement, cet assemblage préalable étant réalisé en doublant les deux faces de la couche décorative en bois avec une couche de support synthétique souple et en refendant le sandwich ainsi obtenu dans la couche décorative en bois.

19. Procédé selon l'une quelconque des revendications 14 à 18, dans lequel le traitement de flexibilisation comprend une étape de rupture de la structure fibreuse du bois constituant la couche de bois après assemblage du revêtement de sol.

20. Procédé selon la revendication précédente, dans lequel la rupture de la structure fibreuse est obtenue en faisant épouser au revêtement de sol une succession de cylindres de diamètres décroissants.

21. Procédé selon l'une quelconque des revendications 14 à 20, dans lequel le traitement de flexibilisation comprend l'imprégnation du bois constituant la couche de bois, avant assemblage, par un produit choisi parmi le groupe constitué des glycols, polyglycols et leurs dérivés, glycérols, polyglycérols et les dialdéhydes, ou un de leurs mélanges, facultativement en présence de catalyseur.

22. Procédé selon l'une quelconque des revendications 14 à 20, dans lequel on réalise une stabilisation dimensionnelle de la couche décorative en bois par imprégnation avec un produit choisi parmi le groupe constitué des glycols, polyglycols et leurs dérivés, glycérols, polyglycérols et les dialdéhydes, ou un de leurs mélanges, facultativement en présence de catalyseur.

23. Procédé selon l'une quelconque des revendications 14 à 22, dans lequel la couche de bois est formée de plusieurs feuilles et/ou lames de bois adjacentes.

24. Procédé selon l'une quelconque des revendications 14 à 23, dans lequel la couche de bois a une épaisseur inférieure à 1 mm, de préférence entre 0,1 et 0,6 mm, de manière encore plus préférée entre 0,2 et 0,4 mm.

25. Procédé selon l'une quelconque des revendications 14 à 24, dans lequel lors de l'assemblage, la face extérieure de la couche d'usure transparente est en contact avec un élastomère.

26. Procédé selon l'une quelconque des revendications 14 à 25, dans lequel la couche d'usure transparente est un film thermoplastique de 50 à 300 µm d'épaisseur.

27. Procédé selon l'une quelconque des revendications 14 à 26, dans lequel on incorpore une feuille thermocollante entre la couche de support synthétique et la couche décorative en bois.

28. Procédé selon l'une quelconque des revendications 14 à 27, dans lequel on incorpore une feuille thermocollante entre la couche décorative en bois et la couche d'usure transparente.

29. Procédé selon la revendication 27 ou 28, dans lequel l'assemblage se fait dans des conditions de température et pression adaptée pour coller les couches du revêtement entre elles.

30. Procédé selon l'une quelconque des revendications 25 à 29, dans lequel la feuille thermocollante est à base de copolyamide ou de polyuréthane et a une épaisseur entre 20 et 50 µm.

31. Procédé selon l'une quelconque des revendications 14 à 30, dans lequel la couche de support synthétique est en PVC ou en matériau à base polyoléfine.

32. Procédé selon l'une quelconque des revendications 14 à 31, dans lequel on assemble dans une première étape la couche de support avec la couche décorative en bois, puis dans une deuxième étape on assemble la couche d'usure transparente avec le produit obtenu lors de la première étape.
